# EUROPEAN PATENT APPLICATION

(11) **EP 2 088 499 A1**
(43) Date of publication of application: **12.08.2009**
(21) Application number: 07832505.7
(22) Date of filing: 26.11.2007
(51) Int. Cl.: G06F 3/042, A63F 13/00, G01B 11/00, G06F 3/041

(54) **POSITION INPUTTING APPARATUS**

(30) Priority: 30.11.2006 JP 2006323306
(71) Applicant: SEGA Corporation, Tokyo 144-8531 (JP)
(72) Inventor: KASAI, Kazuyoshi, Tokyo 144-8531 (JP)
(74) Representative: Sajda, Wolf E.
(86) International application number: PCT/JP2007/072780
(87) International publication number: WO 2008/066004

(57) **Abstract**

An optical position input device is provided which enables simultaneously inputting of multiple points.

The position input device (10) includes: a light guide plate (5) having a surface with an active input area (1) formed thereon, for allowing one to touch the surface for identification of an input position to obtain scattered light from a ray of light traveling under the input position; a plurality of light emitting elements (2) for emitting a ray of light into the light guide plate (5) and scanning the active input area (1) in one coordinate direction with the emitted ray of light; a light receiving element (3) disposed along the other coordinate direction of the active input area, for receiving the scattered light guided by the light guide plate (5); and input position detection means (4) for detecting an input position within the active input area (1) based on a coordinate position in the one coordinate direction identified by scanning with the plurality of light emitting elements (2) and a coordinate position identified in the other coordinate direction when the plurality of light emitting elements (2) are turned on or off for scanning, and the coordinate position in the other coordinate direction can be identified by the light receiving element (3) receiving the light.

## Description

### TECHNICAL FIELD

The present invention relates to a position input device for inputting information of a position on a flat or curved surface.

### BACKGROUND ART

In general, the position input device serves to obtain, as an input signal, a position on a plane that is identified as its horizontal coordinate and vertical coordinate, which are the coordinates on two orthogonal axes. Position input devices include a device known as a touch panel which allows one to touch a planar input area with a finger or stylus to locate its input position and which detects the position to acquire an input signal.
Such planar position input devices adopt various types of schemes. Among them, optical planar position input devices with a combination of a light emitting element and a light receiving element are widely available as being advantageous in terms of, for example, responsivity, reliability, and durability (see Patent Documents 1 and 2 below).

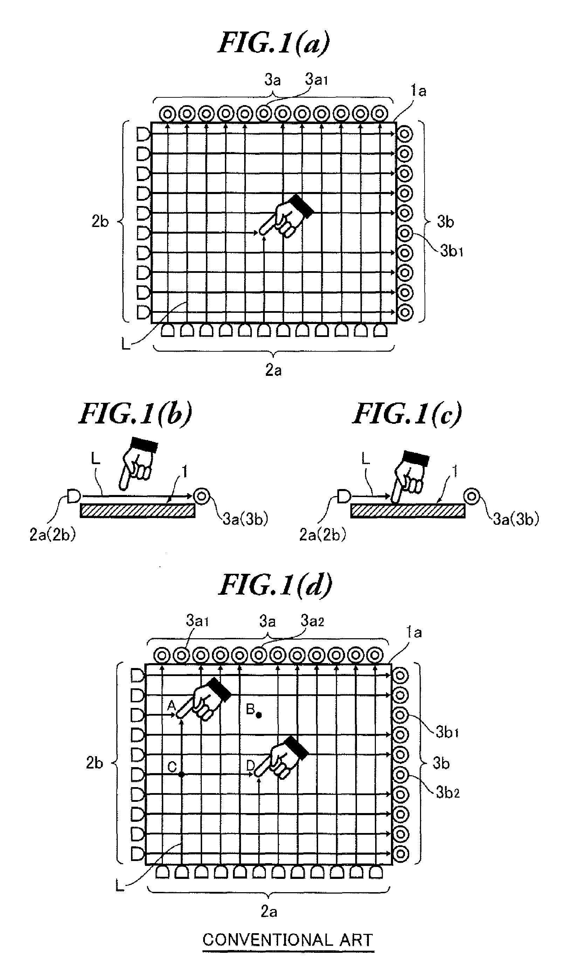

Fig. 1 is an explanatory view illustrating a conventional technique for a planar position input device that employs an infrared shield scheme or an example of optical schemes. According to this conventional technique, as shown in Fig. 1(a), a plurality of light emitting elements 2a and a plurality of light receiving elements 3a disposed opposite thereto are arranged along the rims of an input flat area 1a to detect the horizontal coordinate position. In addition, a plurality of light emitting elements 2b and a plurality of light receiving elements 3b disposed opposite thereto are also arranged to detect the vertical coordinate position.
This device is configured in such a manner that rays of light emitted from the light emitting elements 2a and 2b impinge upon the light receiving elements 3a and 3b disposed respectively opposite thereto, thereby allowing for detecting positions in the entire input flat area 1a.

According to this device, as shown in Fig. 1(b), the light emitted from the light emitting element 2a (2b) passes over the input flat area 1a to impinge upon the light receiving element 3a (3b). Thus, as shown in Fig. 1(b), a finger or the like placed on the input flat area 1a interrupts the light from the light emitting element 2a (2b), causing a decrement in the amount of light received by the light receiving element 3a (3b) disposed opposite thereto. The position of the light receiving element 3a (3b) having received the reduced amount of light or the position of the light emitting element 2a (2b) opposite thereto makes it possible to detect the input position.

Patent Document 1 Japanese Patent Application Laid-Open JP-A-7-020 985
Patent Document 2 Japanese Patent Application Laid-Open JP-A-10-027 067

### DISCLOSURE OF THE INVENTION

### PROBLEMS TO BE SOLVED BY THE INVENTION

According to this conventional technique, when an input is made at one point on the input flat area 1a as shown in Fig. 1(a), the light receiving elements 3a₁ and 3b₁ detect its horizontal coordinate position and its vertical coordinate position, thereby identifying the one position on the input flat area 1a.

However, in this conventional technique, when multiple points (two points in the illustrated example) are simultaneously pointed on the input flat area 1a as shown in Fig. 1(d), the interrupted light receiving elements are two elements 3a₁ and 3a₂ for detecting the horizontal coordinate positions and two elements 3b₁ and 3b₂ for detecting the vertical coordinate positions.
Thus, in identifying the positions on the input flat area 1a by the combination of the light emitting elements 3a₁ and 3a₂ and the light receiving elements 3b₁ and 3b₂, it is impossible to distinguish between the two points A and D, which have been actually pointed, and the other two points B and C, which have not been pointed. Therefore, the conventional optical planar position input device cannot be used for simultaneously locating multiple input points.

There is also another problem that the principle of position detection does not allow for forming the active input area in a curved shape.

On the other hand, for example, game machines which allow game program images to be displayed on the screen often employ, as an input device for controlling the program, a position input device that forms an active input area on the display screen. In such a game machine, the capability of simultaneously detecting multiple points on the screen allows the operator to input control signals using his or her both hands. This also enables multiple participants to control simultaneously the game program images displayed on the screen (simultaneous multiplayer play). It is thus possible to provide ease of operation and versatility for plays with the game machine.

The position input device may be employed as an input device not only for game machines but also for image controllers. In this case, multiple operators can control images in parallel. Considering this context and the current situation that the display screen has been increased in size, the capability of simultaneously locating multiple input points effectively enhances the operability of the image controller.

The present invention was developed, for example, to address these problems. It is therefore an object of the present invention to enable an optical position input device to locate multiple input points simultaneously as well as to enable a game machine or an image controller with the position input device to locate multiple input points simultaneously, thereby effectively enhancing its operability.

### MEANS FOR SOLVING THE PROBLEMS

To achieve such an object, a position input device according to an embodiment of the present invention is characterized as follows.

First, the position input device includes: a light guide plate having a surface with an active input area formed thereon, for allowing an operator to touch the surface for identification of an input position to obtain scattered light from a ray of light traveling under the input position; a plurality of light emitting elements for emitting a ray of light into the light guide plate and scanning the active input area in one coordinate direction with the emitted ray of light; a light receiving element disposed along the other coordinate direction of the active input area, for receiving the scattered light guided by the light guide plate; and input position detection means for detecting an input position within the active input area based on a coordinate position in the one coordinate direction identified by scanning with the plurality of light emitting elements and a coordinate position identified in the other coordinate direction when the plurality of light emitting elements are turned on or off for scanning, and the coordinate position in the other coordinate direction can be identified by the light receiving element receiving the light.

The present invention is characterized in this manner, and thus can obtain the following effects.

A ray of light is emitted to the light guide plate from the plurality of light emitting elements scanning the active input area in one coordinate direction. When an input position has not yet been identified by a position input operation within the active input area, the ray of light travels in a straight line without causing scattered light to be generated, so that the light receiving element disposed along the other coordinate direction of the active input area does not receive the ray of light. However, allowing a finger or the like to touch the active input area formed across the surface of the light guide plate to identify an input position causes the touch point or the contact area (hereinafter simply referred to as the touch point) to locally change its relative refractive index. Thus, when a ray of light emitted into the light guide plate travels across it while repeating total reflections to pass under the input position, the light is scattered at that position so that the scattered light is guided in a different direction, thereby allowing the light receiving element to receive the light.

At this time, the plurality of light emitting elements are arranged so that the emitted rays of light scan the active input area in one coordinate direction, and the light receiving element is arranged along the other coordinate direction of the active input area. Thus, the reception of the scattered light with the light receiving element can be analyzed to thereby identify the coordinate position in the other coordinate direction.
On the other hand, the scanning position of the light emitting element upon reception of the scattered light can be used to determine the coordinate position in the one coordinate direction. It is thus possible to use the coordinate position in the one coordinate direction and the coordinate position in the other coordinate direction to detect the input position (touch point) located on the active input area.

Now, for such an input position detection, suppose that a plurality of touch points are present on the active input area, and a plurality of input positions are identified. Even in this case, all the input positions (touch points) can be identified based on the coordinate position in the other coordinate direction identified by the scattered light being received and the coordinate position in the one coordinate direction identified by the scanning position of the light emitting element that emits the incident light causing the scattered light.
Therefore, considering that the plurality of light emitting elements are all turned on or off for scanning in one scanning period at the same time, it is possible to simultaneously input information of multiple points so that multiple input positions can be identified at the same time.

Light emitting elements and light receiving elements may be specifically arranged as follow. That is, for a light guide plate having an active input area surrounded by multiple sides, a plurality of light emitting elements may be arranged on one of the multiple sides, and a plurality of light receiving elements are arranged along another side which does not oppose that side. The one side of the multiple sides and the another side which does not oppose that side intersect each other at right angles if the light guide plate is rectangular.
However, they need not always be orthogonal to each other. According to this arrangement, when no input position is located on the active input area, the ray of light emitted from a light emitting element into the light guide plate and then linearly travelling through the light guide plate is never received by the light receiving elements. The light receiving element receives the scattered light only when the input position is located. Note that the aforementioned "side" may not necessarily be linear.

One exemplary operation of such input position detection means for detecting an input position is as follows. Suppose that a plurality of light emitting elements are turned on for scanning and some of the light receiving elements have an amount of received light above a threshold value when a particular light emitting element is turned on. In this case, the input position detection means can identify the coordinate position in the other coordinate direction at which the light receiving element is placed based on the position of the light receiving element. Additionally, the scanning position of the light emitting element having been turned on then identifies the coordinate position in the one coordinate direction at which the light emitting element is placed. Thus, these two identified coordinate positions serve to detect the input position on the active input area.

With this configuration, suppose that the aforementioned touch point is present on the active input area with the input position located, and one or more light receiving elements which output an amount of received light above the threshold value are selected from among the plurality of light receiving elements. In this case, since the ray of light emitted from the light emitting element turned on at that point in time is passing under the input position, a particular light emitting element can be selected from among the plurality of light emitting elements. The coordinate position identified by the scanning position of the selected light emitting element and the coordinate position identified by the position of the selected light receiving element make it possible to detect the position of the touch point on the active input area.

In this case, the amount of scattered light the light receiving element receives tends to decrease as the optical path length along which light reaches the light receiving element from the light emitting element increases. To address this issue, the threshold value is set according to the turned-on for scanning position of the light emitting element and the position of the light receiving element. That is to say, the threshold value is set to a lower value for a longer optical path length along which light reaches the light receiving element from the light emitting element. On the contrary, the threshold value is set to a higher value for a shorter optical path length along which light reaches the light receiving element from the light emitting element.

To address the issue in the same manner, the threshold value may be set to a constant value, so that the amount of received light may be normalized according to the turned-on for scanning position of the light emitting element and the position of the light receiving element. That is, for a longer optical path length along which light reaches the light receiving element from the light emitting element, the output amount of received light to be compared with the threshold value is adjusted to a value higher than the actual amount of received light.
On the other hand, for a shorter optical path length along which light reaches the light receiving element from the light emitting element, the output amount of received light to be compared with the threshold value is set to a value lower than the actual amount of received light.

On the other hand, as one exemplary operation of the input position detection means, consider a case where a plurality of light emitting elements are turned on for scanning, and some light receiving element among a plurality of light receiving elements indicate a maximum amount of light received when a particular light emitting element is turned on. In this case, an input position on the active input area is detected based on the coordinate position identified by the scanning position of the light emitting element and the coordinate position identified by the position of the light receiving element.

With this configuration, suppose that the aforementioned touch point is present on the active input area with the input position located, and a light receiving element which outputs a relative maximum amount of received light is selected from among the plurality of light receiving elements. In this case, since the ray of light emitted from the light emitting element turned on at that point in time is passing under the touch point, the position of the touch point on the plane can be detected based on the coordinate position of the scanning position of the light emitting element and the coordinate position of the position of the selected light receiving element.

Furthermore, as another exemplary operation, consider a case where a plurality of light emitting elements, all being kept turned on, are turned off for scanning, so that some light receiving element providing a reduced amount of received light can be selected from among a plurality of light receiving elements when a particular light emitting element is turned off. In this case, the input position on the active input area is detected in accordance with the coordinate position identified by the scanning position of the particular light emitting element and the coordinate position based on the position of the light receiving element.

With this configuration, suppose that the aforementioned touch point is present on the active input area with the input position located, and a plurality of light emitting elements are all kept turned on. In this case, the ray of light emitted from a particular light emitting element among them passes through a touch point causing scattered light to be generated. Thus, the light receiving element closest to the touch point outputs a significant amount of received light, so that the light receiving element can be selected as the particular light receiving element.
Furthermore, when a plurality of light emitting elements, all being kept turned on, are turned off for scanning, the amount of light of the light receiving element selected as described above decreases at the point in time at which the ray of light stops passing under the touch point. It is thus possible to select, as the particular light emitting element, the light emitting element that is turned off when the decrease in the amount of light occurs. Thus, the position of the touch point on the active input area can be detected based on the coordinate position identified by the scanning position of the selected light emitting element and the coordinate position identified by the position of the selected light receiving element.

The active input area may be either flat or curved in shape. For example, the light guide plate may be generally arc-shaped in cross section along one coordinate direction. Forming the active input area on a curved surface in this manner can serve to significantly improve the flexibility of designing a position input device as a whole when the device is used as an input device for a game device or the like.

To allow the light emitted from a light emitting element to be drawn through the side end portion of the light guide plate into the light guide plate, the light needs to be incident at an angle of incidence θ that is determined by the refractive index of the light guide plate and its surrounding refractive index (Snell's law).
Thus, to obtain a sufficient amount of incident light, the light emitting element needs to be disposed so that the direction of its emission is tilted by the angle of incidence θ with respect to the end face of the side end portion of the light guide plate. Therefore, a tilted face may be formed on the side end portion of the light guide plate according to the aforementioned angle of incidence θ, thereby facilitating efficient arrangement of the light emitting elements.

Such a case may occur in which the active input area of the light guide plate is damaged due to external force or the like, and the damaged portion causes the ray of light emitted into the light guide plate to diffuse, thereby causing malfunction in the position input device. Considering the case like this, protective means for protecting the active input area may be desirably provided on the active input area.

When the position input device is disposed with the active input area tilted or upright, the light receiving elements are desirably disposed on any side other than the bottom side of the light guide plate, for example, on the upper side. Placing the light receiving elements on the upper side of the light guide plate makes it possible to prevent dust particles from accumulating on the light receiving elements. It is also possible to prevent the position input device from being reduced in position detection accuracy by being exposed to sunlight or illumination light or other external light.

Furthermore, to achieve the aforementioned object, a position input device according to another embodiment of the present invention includes the following features.

That is, the position input device includes: a light guide plate having a surface with an active input area formed thereon, for allowing one to touch the surface for identification of an input position to obtain scattered light from a ray of light traveling under the input position; a light emitting element disposed along one coordinate direction of the light guide plate; a plurality of open/close means disposed between the light guide plate and the light emitting element, for opening or closing an incidence optical path for the ray of light from the light emitting element into the light guide plate so as to allow the ray of light emitted into the light guide plate to scan the active input area in the one coordinate direction; a light receiving element disposed along the other coordinate direction of the active input area, for receiving scattered light that is guided through the light guide plate; and input position detection means for detecting an input position within the active input area based on a coordinate position in the one coordinate direction identified by scanning with the plurality of open/close means and a coordinate position identified in the other coordinate direction when the plurality of open/close means are opened or closed for scanning, and the coordinate position in the other coordinate direction can be identified by the light receiving element receiving the light.

The present invention characterized as described above can provide the following effects.

A ray of light is emitted into the light guide plate through some open/close means, having an incidence optical path opened for a light emitting element, among a plurality of open/close means scanning the active input area in one coordinate direction. When an input position has not yet been located through a position input operation within the active input area, the ray of light travels in a straight line without causing scattered light to be generated so that the light receiving element disposed along the other coordinate direction of the active input area does not receive the ray of light.
However, allowing a finger or the like to touch the active input area formed across the surface of the light guide plate to identify an input position causes the touch point or the contact area to locally change its relative refractive index. Thus, when a ray of light emitted into the light guide plate travels across it while repeating total reflections to pass under the input position, the light is scattered at that position so that the scattered light is guided in a different direction, thereby allowing the light receiving element to receive the light.

At this time, the plurality of open/close means are arranged so that the rays of light emitted through the opened open/close means scan the active input area in one coordinate direction, and the light receiving element is arranged along the other coordinate direction of the active input area. Thus, the reception of the scattered light with the light receiving element can be analyzed to thereby identify the coordinate position in the other coordinate direction.
On the other hand, the scanning position of the open/close means upon reception of the scattered light can be used to determine the coordinate position in the one coordinate direction. It is thus possible to use the coordinate position in the one coordinate direction and the coordinate position in the other coordinate direction to detect the input position (touch point) located on the active input area.

Now, for such an input position detection, suppose that a plurality of touch points are present on the active input area, and a plurality of input positions are identified. Even in this case, all the input positions (touch points) can be identified based on the coordinate position in the other coordinate direction identified by the scattered light being received and the coordinate position in the one coordinate direction identified by the scanning position of open/close means opening or closing the optical path of the light emitting element emitting the incident light causing the scattered light.
Therefore, considering that all the plurality of open/close means are opened or closed for scanning in one scanning period at the same time, it is possible to simultaneously input information of multiple points so that multiple input positions can be identified at the same time.

### BRIEF DESCRIPTION OF THE DRAWINGS

- Fig. 1: is an explanatory view illustrating a conventional technique;
- Fig. 2: is an explanatory view illustrating the configuration of a position input device according to an embodiment of the present invention;
- Fig. 3: is an explanatory view illustrating the operation of a position input device according to an embodiment of the present invention;

- Fig. 4: is an explanatory view illustrating another embodiment of a light guide plate according to the present invention;
- Fig. 5: is an explanatory view illustrating still another embodiment of a light guide plate according to the present invention;
- Fig. 6: is an explanatory view illustrating the configuration of a position input device according to another embodiment of the present invention;
- Fig. 7: is an explanatory view illustrating the configuration of a position input device according to still another embodiment of the present invention; and
- Fig. 8: is an explanatory view illustrating an exemplary application of a position input device of the present invention.

### BEST MODE FOR CARRYING OUT THE INVENTION

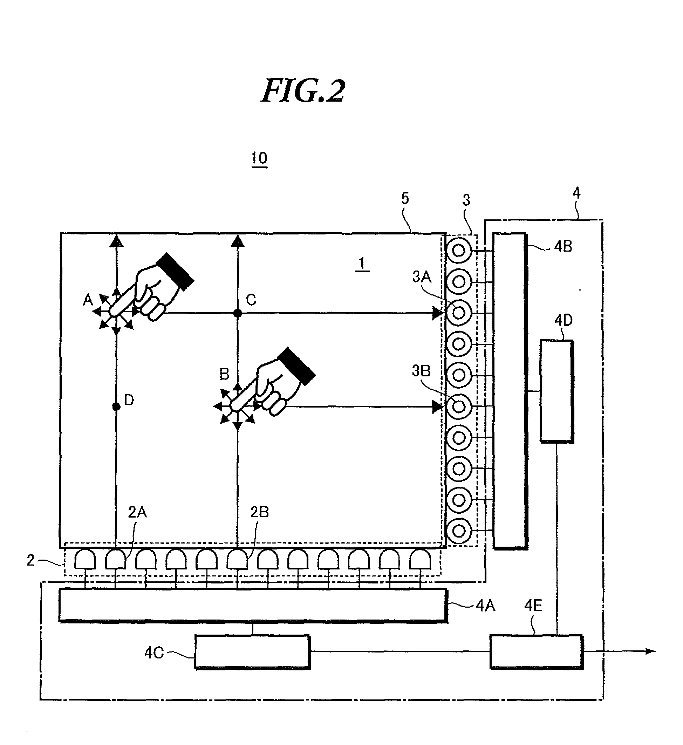

Embodiments of the present invention will now be described below with reference to the accompanying drawings. Fig. 2 is an explanatory conceptual diagram illustrating the configuration of a position input device according to an embodiment of the present invention.

The position input device 10 includes: a light guide plate 5 having a surface with an active input area 1 formed thereon, for allowing one to touch the surface for identification of the input position, thereby obtaining scattered light from a ray of light traveling under the input position; a plurality of light emitting elements 2 for emitting a ray of light into the light guide plate 5 so as to scan the active input area 1 with the emitted ray of light in one coordinate direction; light receiving elements 3 disposed along the other coordinate direction of the active input area 1, for receiving scattered light guided by the light guide plate 5; and input position detection means 4 for detecting an input position within the active input area 1 based on a coordinate position in the one coordinate direction identified by scanning with the plurality of light emitting elements 2 and a coordinate position identified in the other coordinate direction when the plurality of light emitting elements 2 are turned on or off for scanning, and the coordinate position in the other coordinate direction can be identified by the light receiving element 3 receiving the light.

In the illustrated example, the plurality of light emitting elements 2 are arranged along at least one side of the rectangular light guide plate 5, with their orientations of light emission aligned in the same direction. The light receiving elements 3 are arranged along another side of the light guide plate 5 to receive light in a direction intersecting the orientations of the light emitted from the light emitting elements 2. The light emitting element 2 and the light receiving element 3 desirably have directivity.

Here, such an example is shown in which a rectangular active input area 1 is formed; however, the invention is not limited thereto. The light guide plate 5 may also have an active input area 1 surrounded by multiple sides, so that a plurality of light emitting elements 2 are disposed along one of the multiple sides, and a plurality of light receiving elements 3 may be disposed along another side that does not oppose the one side.
Furthermore, the light receiving elements 3 can be a single one so long as it is disposed along the other coordinate direction so that a coordinate position in the other coordinate direction can be identified from the result of analysis of the reception of light. Therefore, the plurality of light receiving elements 3 to be provided can be replaced with one line sensor or image sensor.

As used herein, the one coordinate direction and the other coordinate direction may be any two directions so long as they contain two orthogonal coordinate directions as in the illustrated example, they are different from each other, and they can identify positions on the plane.

The input position detection means 4 detects an input position (point A or B) in the active input area 1 based on each of the coordinate positions identified by the position of the selected light emitting element (2A or 2B) and the position of the light receiving element (3A or 3B). This detection can be done when the plurality of light emitting elements 2 are selectively turned on or off in sequence, so that a particular light receiving element (for example, 3A or 3B) can be selected based on the amount of received light of the plurality of light receiving elements 3 when a particular light emitting element (for example, 2A or 2B) is selected.

At this time, even when input positions have been located simultaneously at two points A and B, the light emitting element 2A and the light receiving element 3A to be identified to detect point A as well as the light emitting element 2B and the light receiving element 3B for identifying point B are synchronously selected, respectively.
It would never happen that the light receiving element 3B is selected at the point in time at which the light emitting element 2A is selected, or the light receiving element 3A is selected at the point in time at which the light emitting element 2B is selected. It is thus possible to distinguish with no problem between point D or C, at which no input position is located, and point A or B, at which an input position is located.

The input position detection means 4 can specifically include: a light emitting element drive section 4A for turning on or off the plurality of light emitting elements 2 for scanning; a received-light photometry section 4B for measuring an amount of light received by each of the plurality of light receiving elements 3; a light emitting element selection section 4C for selecting a light emitting element to be turned on or off for scanning by the light emitting element drive section 4A; a light receiving element selection section 4D for selecting a particular light receiving element based on the output from the received-light photometry section 4B; and an input position output section 4E for outputting an input position based on the coordinate position of the light emitting element selected by the light emitting element selection section 4C and the coordinate position of the light receiving element selected by the light receiving element selection section 4D.

The light emitting element drive section 4A sequentially selects and turns on or off for scanning one or more of the plurality of light emitting elements 2 based on the output from the light emitting element selection section 4C. The selection scheme mentioned above may be employed from one of the following exemplary schemes including: the sequential turned-on scan scheme by which the light emitting elements are turned on one by one in sequence from one end to the other; the random turned-on scan scheme by which the plurality of light emitting elements are turned on one by one at random; the scheme for sequentially selecting the turned-on position while a plurality of adjacent light emitting elements are being simultaneously turned on; the sequential turned-off scan scheme in which the plurality of light emitting elements, all being kept turned on, are turned off one by one in sequence from one end to the other; the random turned-off scan scheme by which the plurality of light emitting elements, all being kept turned on, are randomly turned off one at a time, and the like.

The light emitting element selection section 4C selects a particular light emitting element from a plurality of light emitting elements to output the selection signal to the light emitting element drive section 4A as well as to the input position output section 4E.

In sync with the timing at which the light emitting element selection section 4C selects a particular light emitting element, the received-light photometry section 4B measures the amount of light received by each of all the light receiving elements 3 for output to the light receiving element selection section 4D. When the particular light receiving element can be selected based on the amount of light received by each light receiving element, the light receiving element selection section 4D outputs the selection signal to the input position output section 4E in sync with the timing at which the light emitting element selection section 4C selects the particular light emitting element.

Every time the light emitting element selection section 4C delivers a selection signal, the input position output section 4E checks to see if a selection signal from the light receiving element selection section 4D is available. When a selection signal is available from the light receiving element selection section 4D, the input position is output based on the coordinate position corresponding to the position of the selected light emitting element and the coordinate position corresponding to the position of the selected light receiving element.
Then, if a plurality of input-position outputs are present, and the selection signal outputs from the light emitting element selection section 4C are within one scanning period for selecting all the light emitting elements, then the plurality of input positions delivered are recognized, when delivered, as multiple points having been simultaneously located.

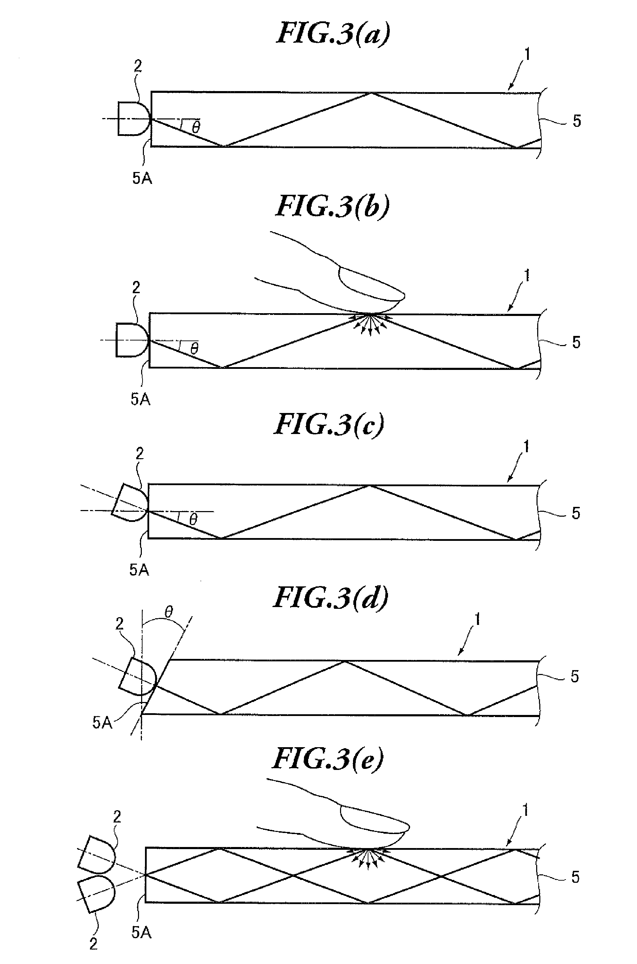

Now, the operation of such a position input device 10 will be described in more detail. As shown in Fig. 3(a), the light emitting element 2 is disposed with a side end portion 5A of the light guide plate 5 serving as an incidence plane. The ray of light emitted from the light emitting element 2 is drawn into the light guide plate 5 and then travels in a straight line through the light guide plate 5 while repeating total reflections. The light guide plate 5 is made of a transparent material having a higher refractive index relative to its surrounding, and for example, may be an acrylic plate or a glass plate with a higher refractive index.

The light guide plate 5 has a thickness that is sufficiently greater than the wavelength of the light entered therein. When no input position is pointed on the active input area 1 (see Fig. 3(a)), the entered ray of light does not spread out in the direction of width but travel in a straight line. Furthermore, since a larger number of repetitions of total reflection would better serve to increase the sensitivity to detection of input positions, it is thus favorable to reduce the thickness of the plate to some extent (to about a few mm).

In contrast to this, as shown in Fig. 3(b), one may point at an input position within the active input area 1 by placing a finger or the like in contact with the input flat area 1 of the light guide plate 5. This contact of the finger or the like causes a change in the relative refractive index of the light guide plate 5 under the touch point. This in turn causes the entered ray of light to scatter under the touch point, thus travelling in directions different from the direction of incidence of the ray of light.
Therefore, a light receiving element 3 that is oriented to receive light in a direction intersecting the direction of emission of light from the light emitting element 2 cannot receive light when no input position is located on the input flat area 1. However, the presence of the aforementioned touch point on the input flat area 1 makes it possible to receive light, and in particular, the light receiving element 3 that is closest to the touch point can receive light most clearly.

To draw the light emitted by the light emitting element 2 from the side end portion 5A of the light guide plate 5 into the light guide plate 5, the light has to be incident at the angle of incidence θ that is determined by the refractive index of the light guide plate 5 and the surrounding refractive index (Snell's law).
Thus, to provide a sufficient amount of incident light, as shown in Fig. 3(c), the light emitting element needs to be arranged with its direction of light emission being tilted by the angle of incidence θ relative to the end face of the side end portion 5A. In this case, as shown in Fig. 3(d), a tilted surface may be formed on the side end portion 5A of the light guide plate 5 depending on the aforementioned angle of incidence θ.
This allows for efficiently making use of the ray of light from the light emitting element as well as facilitating the placement of the light emitting element. Furthermore, to improve the sensitivity to the touch point within the active input area 1, as shown in Fig. 3(d), the light emitted from a plurality of light emitting elements 2 placed at different angles need to be entered into the light guide plate 5.

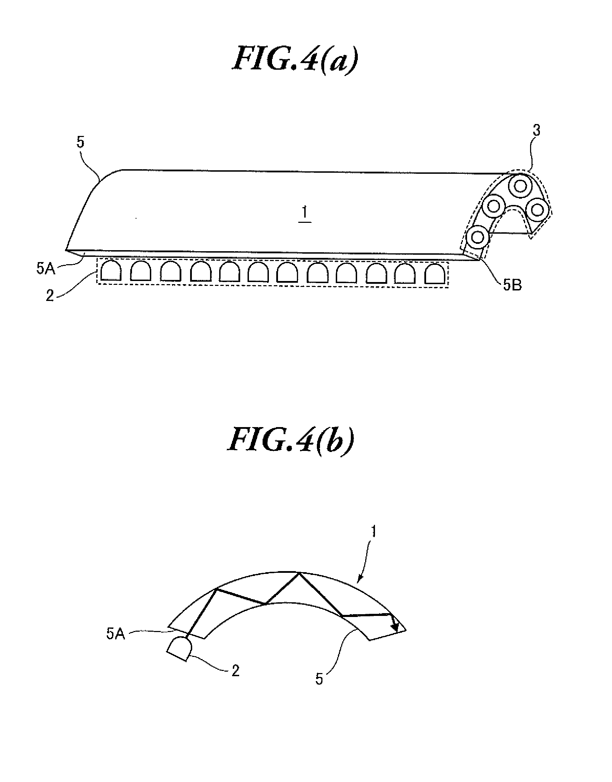

Fig. 4 is a view illustrating an example in which the active input area 1 of the light guide plate 5 is formed in a curved surface so that the cross section in the coordinate direction along which the light receiving elements 3 are placed is generally arc-shaped. Fig. 4(a) is a conceptual diagram showing the configurational relationship between the light guide plate 5 formed in a curved surface, the light emitting elements, and the light receiving elements. As shown in Fig. 4(a), the plurality of light emitting elements 2 are disposed along the straight side end portion 5A in one coordinate direction of the light guide plate 5, while the light receiving elements 3 are disposed along a curved side end portion 5B in the other coordinate direction.
The ray of light emitted from the light emitting element 2 into the light guide plate 5 configured in this manner travels through the light guide plate 5 as shown in Fig. 4(b). The light guide plate 5 and the active input area can be shaped as appropriate not only in the general arc but also, for example, in a waveform as desired. Thus, for example, when the position input device according to the present invention is used as an input device such as for a game device, it is possible to significantly improve the design flexibility of the entire system.

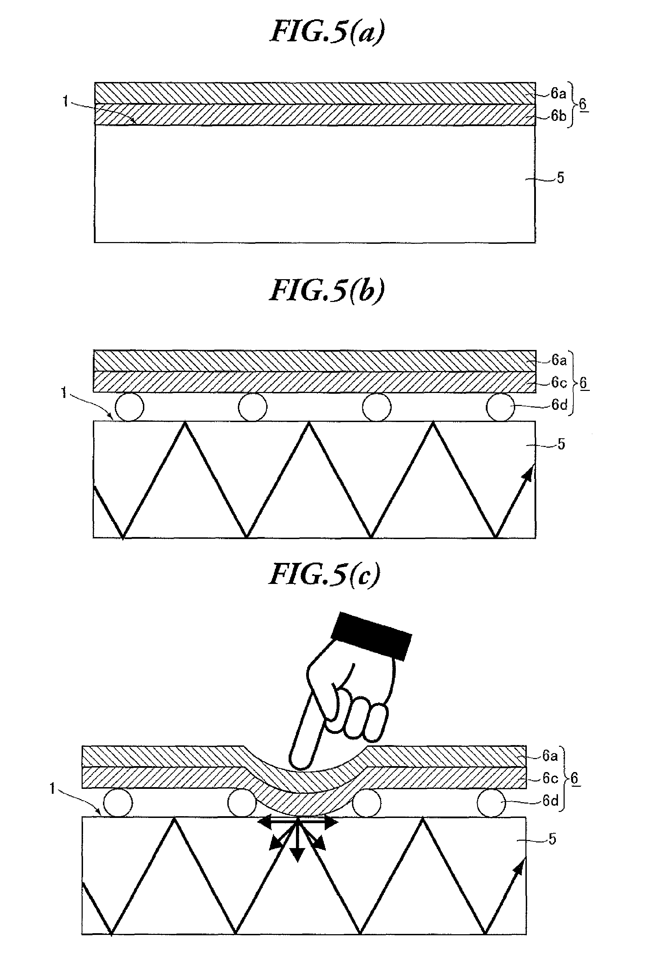

Fig. 5 is a conceptual diagram illustrating an example in which protective means 6 for protecting the active input area 1 is provided on the active input area 1 of the light guide plate 5.

Fig. 5(a) is a view illustrating an example in which a protective sheet 6a is provided on the active input area 1 of the light guide plate 5 via an adhesive 6b. In the example shown in Fig. 5(a), for instance, an acrylic plate may be used as the light guide plate 5. In this case, as the adhesive 6b, it is favorable to use an acrylic adhesive that is close in refractive index to the acrylic plate.

Fig. 5(b) is a view illustrating an example in which the protective means 6 is provided on the active input area 1 of the light guide plate 5 via a tight sheet 6c and dot spacers 6d with the protective sheet 6a affixed thereon. In the example shown in Fig. 5(b), the dot spacer 6d interposed between the light guide plate 5 and the tight sheet 6c serves to form an air layer between the light guide plate 5 and the tight sheet 6c.
When no touch point exists on the active input area 1, as shown in Fig. 5(b), the light incident on the light guide plate 5 travels in a straight line through the light guide plate 5 while being repeatedly reflected at the boundaries between the light guide plate 5 and the air layer. As shown in Fig. 5(c), a touch of a finger or a touch stylus to the protective sheet 6a causes the tight sheet 6c to contact with the active input area 1 at the touch point (contact area), thereby allowing the incident light to diffuse and thus providing scattered light.

Now, a specific operation of the input position detection means 4 will be described in accordance with an example in which the light emitting elements 2 are turned on for scanning. When the light emitting element selection section 4C selects a particular light emitting element from the plurality of light emitting elements 2, the ray of light emitted by the identified light emitting element is drawn into the light guide plate 5. At this time, the entered ray of light does not travel toward the light receiving elements 3 but only in a straight line when no position input is made in the active input area 1.
Thus, the received-light photometry section 4B never finds the amount of received light greater than the threshold value at any one of the plurality of light receiving elements 3. Also, the light emitting element that emits a ray of light passing under a touch point may not be selected yet even when a position input was made in the active input area 1. In this case, in the similar manner, the received-light photometry section 4B never finds the amount of received light greater than the threshold value at any one of the plurality of light receiving elements 3.

In contrast to this, as shown in Fig. 2, when the light emitting element selection section 4C has selected a particular light emitting element from the plurality of light emitting elements 2, a position input operation may have been performed in the active input area 1, and the light emitting element 2A may have been selected which emits a ray of light passing under the touch point A. In this case, in sync with the timing at which the light emitting element 2A is selected, the light receiving elements 3A closest to the touch point A is to output the amount of received light greater than the threshold value.
Thus, in sync with this timing of selection, the received-light photometry section 4B measures outputs from all the light receiving elements 3 for delivery to the light receiving element selection section 4D. Then, the light receiving element selection section 4D compares the amount of light received by each light receiving element with the threshold value to select the light receiving element 3B that has delivered the amount of received light greater than the threshold value. This selection signal is delivered to the input position output section 4E.

The threshold value defined in the light receiving element selection section 4D should be set to such a value that allows for identifying one or more light receiving elements that are very close to the touch point. However, it should be considered that the longer the optical path length from the selected light emitting element to the light receiving element via the touch point, the lower the amount of received light tends to become.
That is, depending on the position of the selected light emitting element and the position of each light receiving element, the threshold value can be lowered for a longer optical path length considering a touch point. On the other hand, for a shorter optical path length, the threshold value can be given a higher setting. According to this configuration, input positions can be detected with higher sensitivity.

Alternatively, with the threshold value kept constant, the amount of received light may be normalized according to the turned-on for scanning position of the light emitting element 2 and the position of the light receiving element 3. In this case, when the optical path length along which light from the light emitting element 2 reaches the light receiving element 3 is longer, the amount of received light is adjusted to a higher value than the actual output. On the contrary, when the optical path length along which light from the light emitting element 2 reaches the light receiving element 3 is shorter, the amount of received light is adjusted to a lower value than the actual output. This also makes it possible to detect input positions with higher sensitivity.

The function of the light receiving element selection section 4D is not limited to the example of comparing the threshold value to the output of the received-light photometry section 4B. The function may be any functionality so long as it serves to select a particular light receiving element based on the amount of light received by each light receiving element that is delivered from the received-light photometry section 4B. In another example, in sync with the timing at which a light emitting element is selected, the received-light photometry section 4B may measure the output from all the light receiving elements 3 for delivery to the light receiving element selection section 4D.
At this time, the amount of light received by each light receiving element may be compared with each other, so that the light receiving element which indicates a relative maximum value of the amount of received light among the plurality of light receiving elements 3 may be selected as the particular light receiving element. According to this arrangement, even in the presence of difference in the amount of light emitted by the light emitting elements or in the optical path length mentioned above, the similar processing may be employed to select the particular light receiving element.

A description will now be made to an exemplary operation of the input position detection means performed when the light emitting elements 2, all being kept turned on, are turned off for scanning. In this case, if with all the light emitting elements 2 being kept turned on, a position input was made in the active input area 1 and the touch point was thus present, then the incident light from the light emitting element 2 is scattered at the touch point so that the reception of the light by the light receiving element 3 is found.
Thus, the light receiving element selection section 4D can compare the threshold value to the amount of light received by each light receiving element and delivered from the received-light photometry section 4B, or alternatively compare the amounts of light received by the respective light receiving element to each other, thereby selecting the particular light receiving element.

Then, the light emitting element selection section 4C selects the particular light emitting element and drive the light emitting element drive section 4A, so that those particular light emitting elements selected from among the light emitting elements 2, all being kept turned on, are sequentially turned off. On the other hand, the light receiving element selection section 4D monitors the amount of light received by the selected light receiving element based on the output from the received-light photometry section 4B.
At the timing at which the light emitting element selection section 4C selects and turns off the particular light emitting element, the amount of light received by the light receiving element that has been already selected may decrease. In this case, at that timing, the light emitting element selection section 4C and the light receiving element selection section 4D deliver the selection signal to the input position output section 4E.

In any of the aforementioned examples, the input position output section 4E determines the coordinate positions of the touch point in one direction and the other direction based on the positions of the selected light emitting element and the selected light receiving element in accordance with the selection signals from the light emitting element selection section 4C and the light receiving element selection section 4D.
Then, the resulting detected input position is delivered to a controller (not shown). At this time, when a plurality of input positions are present within one scanning period during which all the light emitting elements are selected, these multiple positions are delivered as having been simultaneously detected, thereby enabling simultaneous input at multiple points.

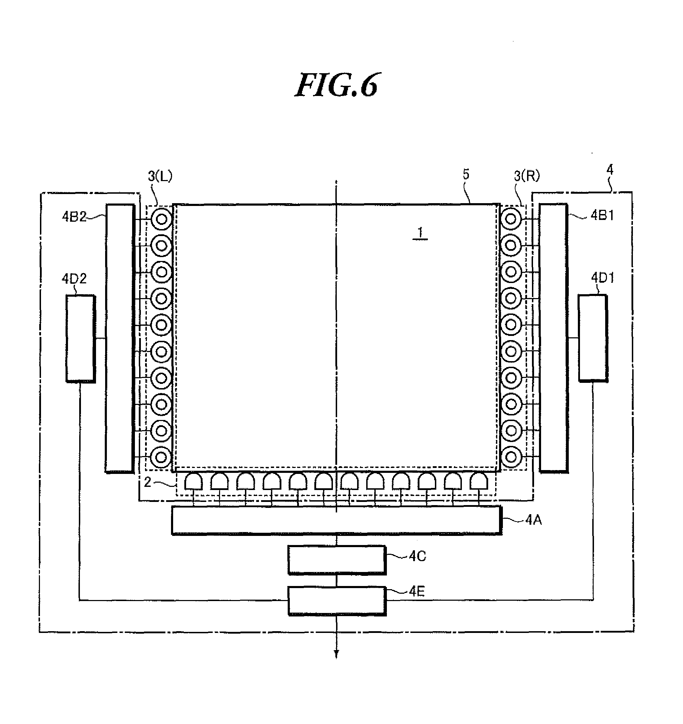

Fig. 6 is an explanatory view illustrating another embodiment of the present invention - the same portions as those of the aforementioned embodiment will be given the same symbols with their repeated descriptions partly eliminated. In this embodiment, the light receiving elements 3 are provided on each of the opposing right and left sides of the light guide plate 5, and a plurality of light emitting elements 2 are divided into right and left halves.
In this configuration, the rays of light emitted from the right-half light emitting elements 2 are received by the light receiving elements 3(R) disposed on the right side, whereas the rays of light emitted from the left-half light emitting elements 2 are received by the light receiving elements 3(L) disposed on the left side.

In this embodiment, a received-light photometry section 4B₁ and a light receiving element selection section 4D₁ are provided for the light receiving elements 3(R) disposed on the right, whereas a received-light photometry section 4B₂ and a light receiving element selection section 4D₂ are provided for the light receiving elements 3(L) disposed on the left. Then, at the timing at which the light emitting element selection section 4C selects the right-half light emitting elements 2, the selection signal from the light receiving element selection section 4D₁ is delivered to the input position output section 4E. On the other hand, at the timing at which the light emitting element selection section 4C selects the left half light emitting elements 2, the selection signal from the light receiving element selection section 4D₂ is delivered to the input position output section 4E.

In this embodiment, the optical path length for light arriving at the light receiving element 3 from the light emitting element 2 via the touch point on the active input area 1 can be shortened. It is thus possible to prevent a decrement in the amount of received light caused by the optical path length to improve the sensitivity to input position detection. Note that in the aforementioned embodiments, such an example has been shown in which the light emitting elements 2 are placed on one side of the light guide plate 5; however, the invention is not limited thereto.
The light emitting elements can also be disposed along the opposing both sides. This configuration also allows for reducing the optical path length for light arriving at light receiving element from the light emitting element via the touch point on the input flat area.

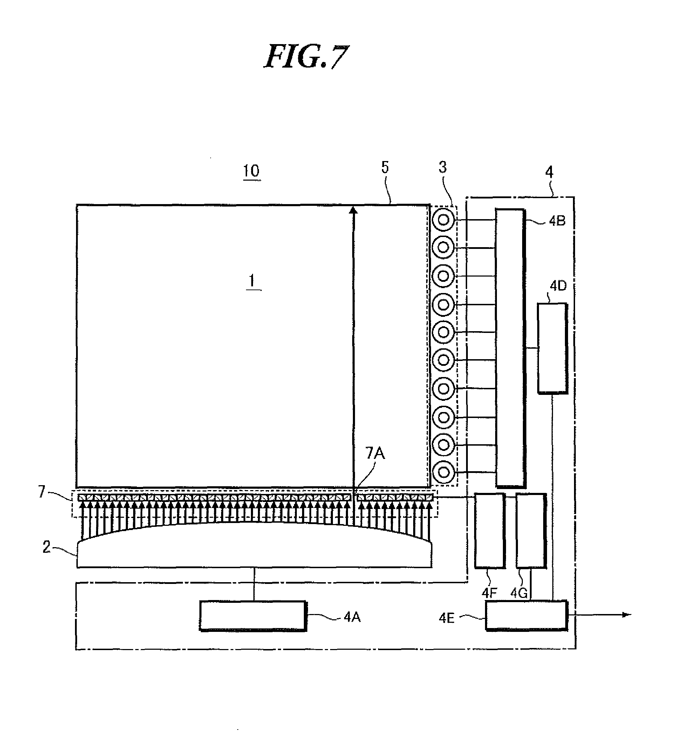

Fig. 7 is an explanatory view illustrating still another embodiment of the present invention - in Fig. 7, the same portions as those of the aforementioned embodiments will be given the same symbols with their repeated descriptions partly eliminated. In this embodiment, one light emitting element 2 is disposed in one coordinate direction of the light guide plate 5 via a plurality of shutter devices 7 that serve as open/close means.

That is, this position input device 10 includes: a light guide plate 5 having a surface with an active input area 1 formed thereon, for allowing one to touch the surface for identification of the input position to obtain scattered light from a ray of light traveling under the input position; a single light emitting element 2 disposed along one coordinate direction of the light guide plate 5; a plurality of shutter devices 7 disposed between the light guide plate 5 and the light emitting element 2, for opening or closing an incidence optical path for the ray of light from the light emitting element 2 to be directed into the light guide plate 5, so as to allow the ray of light emitted into the light guide plate 5 to scan the active input area 1 in one coordinate direction; the light receiving elements 3 disposed along the other coordinate direction of the active input area 1, for receiving scattered light guided through the light guide plate 5; and input position detection means 4 for detecting an input position within the active input area 1 based on a coordinate position in the one coordinate direction identified by scanning with the plurality of shutter devices 7 and a coordinate position identified in the other coordinate direction. This detection can be done when the plurality of shutter devices 7 are opened or closed for scanning to identify the coordinate position in the other coordinate direction by the light receiving element 3 receiving the light.

In the illustrated example, the plurality of shutter devices 7 are arranged along at least one side of the rectangular light guide plate 5, between the light guide plate 5 and the light emitting element 2. The light receiving elements 3 are arranged along another side of the light guide plate 5 to receive light in a direction intersecting the orientation of light emitted from the light emitting element 2 and transmitted by the shutter means 7 being opened.

The input position detection means 4 sequentially selects and opens or closes the plurality of shutter devices 7 so as to select a particular shutter device (for example, 7A), and then a particular light receiving element can be selected from the amount of light received by the plurality of light receiving elements 3. In this case, the input position within the active input area 1 is detected based on each of the coordinate positions identified by the position of the selected shutter device 7A and the position of the light receiving element.

Specifically, the input position detection means 4 can include: a light emitting element drive section 4A for turning on the light emitting elements; a shutter device drive section 4F for opening or closing the plurality of shutter devices 7 for scanning; a received-light photometry section 4B for measuring an amount of light received by each of the plurality of light receiving elements 3; a shutter device selection section 4G for selecting a shutter device 7 to be opened or closed by the shutter device drive section 4F for scanning; a light receiving element selection section 4D for selecting a particular light receiving element based on the output from the received-light photometry section 4B; and an input position output section 4E for outputting an input position based on the coordinate position of the shutter device selected by the shutter device selection section 4G and the coordinate position of the light receiving element selected by the light receiving element selection section 4D.

The shutter device drive section 4F sequentially selects and opens or closes one or more of the plurality of shutter devices 7 for scanning based on the output from the shutter device selection section 4G. The selection scheme mentioned above may be employed from one of the following exemplary schemes including: the sequential open scan scheme by which the shutter devices are opened one by one in sequence from one end to the other; the random open scan scheme by which the plurality of shutter devices are opened one by one at random; the scheme for sequentially selecting an open position while a plurality of adjacent shutter devices are being opened simultaneously; the sequential close scan scheme in which the plurality of shutter devices, all being kept opened, are closed one by one in sequence from one end to the other; the random close scan scheme by which the plurality of shutter devices, all being kept opened, are closed randomly one at a time, and the like.

The shutter device selection section 4G selects a particular shutter device from the plurality of shutter devices to output the selection signal to the shutter device drive section 4F as well as to the input position output section 4E.

In sync with the timing at which the shutter device selection section 4G selects a particular shutter device, the received-light photometry section 4B measures the amount of light received by each of all the light receiving elements 3 for output to the light receiving element selection section 4D. When the particular light receiving element can be selected based on the amount of light received by each light receiving element, the light receiving element selection section 4D outputs the selection signal to the input position output section 4E in sync with the timing at which the shutter device selection section 4G selects the particular shutter device.

Every time the shutter device selection section 4G delivers a selection signal, the input position output section 4E checks to see if a selection signal from the light receiving element selection section 4D is available. When a selection signal is available from the light receiving element selection section 4D, the input position is output based on the coordinate position corresponding to the position of the selected shutter device and the coordinate position corresponding to the position of the selected light receiving element.
Then, if a plurality of input-position outputs are present, and the selection signal outputs from the shutter device selection section 4G are within one scanning period for selecting all the shutter devices, then the plurality of input positions delivered are recognized, when delivered, as multiple points having been simultaneously located.

In the embodiment shown in Fig. 7, for example, the plurality of shutter devices 7 serving as open/close means can be liquid crystal shutters or mechanical shutters.

As described above, the aforementioned embodiments of the present invention enable the position input devices to simultaneously locate multiple points in one scanning period regarded as the same timing. As used herein, the term "simultaneous multi-point location" refers, in one hand, to enabling simultaneous inputs of multiple positions of those points specified by a finger or the like. On the other hand, the term also refers to enabling an input, at one timing, of the position of a region having a given area such as the palm of a hand, or enabling an input, at the same timing, of multiple positions of such regions.

When a position input device of the aforementioned embodiments is used, for example, as an input device for a game machine which displays a game program image on the screen, the characters or items appearing on the display screen can be manipulated simultaneously with both hands of a player. It is also possible for multiple players to enjoy a game at the same time, thus providing ease of operation and versatility for plays with the game machine.
Furthermore, the position input device used as an input device for an image controller enables simultaneous inputs by multiple operators, so that it can be used as an input device for a number of people to draw images on a large screen at the same time.

On the other hand, if a position input device according to the aforementioned embodiments of the present invention is included in a game machine or the like with the active input area disposed at an angle or upright, then the light receiving elements are preferably disposed along the upper side of the light guide plate. Provision of the light receiving elements along the upper side of the light guide plate can prevent dust particles or the like from accumulating on the light receiving elements. This configuration can also prevent the position input device from degradation in position detection accuracy caused by sunlight, interior illumination light, or other external light.

### EXAMPLE

An example corresponding to the embodiment shown in Fig. 2 will be described below.

As the light emitting element 2, infrared LEDs can be used which have an infrared wavelength (peak emission wavelength) of 870 nm and a half-width angle of +/-5°. As the light receiving element 3, phototransistors can be used which have an infrared peak sensitivity wavelength of 870 nm and a half-width angle of +/-15°. As the light guide plate 5, an acrylic plate (with a refractive index of approximately 1.49 and a total reflection angle (critical angle) of 42.2°) is used with the angle of incidence θ of the light emitting element 2 being set to a value close to a critical angle of 42.2°. The acrylic plate can be set to a thickness of 2 mm, an example by which a good input position sensitivity can be obtained.

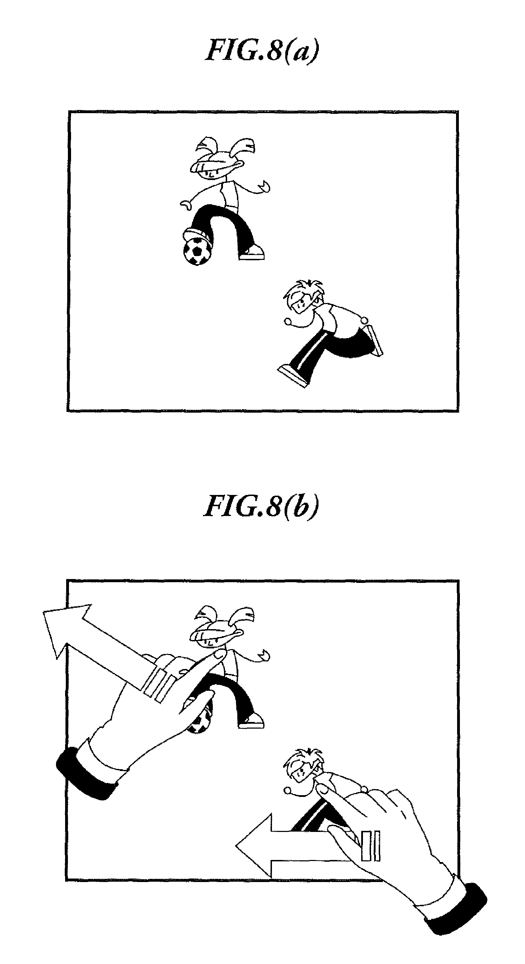

The position input device of the present invention which enables simultaneously locating multiple points is applicable as an input device, for example, to a game machine, as shown in Fig. 8, which displays game program images on the screen.

The example shown in Fig. 8(a) is a sports game such as soccer, where a plurality of characters (players and a ball) move around on the screen. On such a game machine, as shown in Fig. 8(b), the position input device allows the player to use his or her both hands simultaneously to input, for example, the direction of movement of the plurality of characters or the direction of the ball being passed.

## Claims

1. A position input device comprising:
a light guide plate having a surface with an active input area formed thereon, for allowing one to touch the surface for identification of an input position to obtain scattered light from a ray of light traveling under the input position;
a plurality of light emitting elements for emitting a ray of light into the light guide plate and scanning the active input area in one coordinate direction with the emitted ray of light;
a light receiving element disposed along the other coordinate direction of the active input area, for receiving the scattered light guided by the light guide plate; and
input position detection means for detecting an input position within the active input area based on a coordinate position in the one coordinate direction identified by scanning with the plurality of light emitting elements and a coordinate position identified in the other coordinate direction when the plurality of light emitting elements are turned on or off for scanning, and the coordinate position in the other coordinate direction can be identified by the light receiving element receiving the light.

2. The position input device according to claim 1, wherein: the light guide plate has the active input area surrounded by multiple sides;
the plurality of light emitting elements are arranged on one side of the multiple sides; and
the light receiving element comprises a plurality of light receiving elements arranged along another side which does not oppose the one side.

3. The position input device according to claim 2, wherein the input position detection means turns on the plurality of light emitting elements for scanning and identifies the coordinate position in the other coordinate direction based on a position of the light receiving element having an amount of received light above a threshold value among the light receiving elements when a particular light emitting element is turned on.

4. The position input device according to claim 3, wherein the input position detection means sets the threshold value according to the turned-on for scanning position of the light emitting element and the position of the light receiving element so that the threshold value is set to a lower value for a longer optical path length along which light reaches the light receiving element from the light emitting element and the threshold value is set to a higher value for a shorter optical path length along which light reaches the light receiving element from the light emitting element.

5. The position input device according to claim 3, wherein the input position detection means sets the threshold value to a constant value so that the amount of received light is normalized according to the turned-on for scanning position of the light emitting element and the position of the light receiving element.

6. The position input device according to claim 2, wherein the input position detection means turns on the plurality of light emitting elements for scanning and identifies the coordinate position in the other coordinate direction based on a position of the light receiving element having a maximum amount of received light among the light receiving elements when a particular light emitting element is turned on.

7. The position input device according to claim 2, wherein the input position detection means turns off the plurality of light emitting elements, all being kept on, for scanning and identifies a coordinate position in the other coordinate direction based on a position of the light receiving element having a reduced amount of received light among the light receiving elements when a particular light emitting element is turned off.

8. The position input device according to claim 1, wherein the active input area is curved.

9. The position input device according to claim 1, wherein the light guide plate has a side end portion formed in a tilted face where the light emitting elements are disposed.

10. The position input device according to claim 1, further comprising protective means provided on the active input area of the light guide plate, for protecting the active input area.

11. The position input device according to claim 1, wherein the light receiving elements are disposed on an upper side of the light guide plate when the active input area of the light guide plate is tilted or upright.

12. A position input device comprising:
a light guide plate having a surface with an active input area formed thereon, for allowing one to touch the surface for identification of an input position to obtain scattered light from a ray of light traveling under the input position;
a light emitting element disposed along one coordinate direction of the light guide plate;
a plurality of open/close means disposed between the light guide plate and the light emitting element, for opening or closing an incidence optical path for the ray of light from the light emitting element into the light guide plate so as to allow the ray of light emitted into the light guide plate to scan the active input area in the one coordinate direction;
a light receiving element disposed along the other coordinate direction of the active input area, for receiving scattered light that is guided by the light guide plate; and
input position detection means for detecting an input position within the active input area based on a coordinate position in the one coordinate direction identified by scanning with the plurality of open/close means and a coordinate position identified in the other coordinate direction when the plurality of open/close means are opened or closed for scanning, and the coordinate position in the other coordinate direction can be identified by the light receiving element receiving the light.

13. An image controller comprising the position input device according to any one of claims 1 to 12.
